# EUROPÄISCHE PATENTANMELDUNG

(11) **EP 3 952 322 A1**
(43) Veröffentlichungstag der Anmeldung: **09.02.2022**
(21) Anmeldenummer: 21185979.8
(22) Anmeldetag: 16.07.2021
(51) Int. Cl.: H04Q 9/00, G05B 19/418, G06F 16/00

(54) **ELEKTRONIKEINHEIT, MESSWERTVERARBEITUNGSSYSTEM UND MESSWERTVERARBEITUNGSVERFAHREN**

(30) Priorität: 03.08.2020 DE 102020120456
(71) Anmelder: Endress + Hauser Conducta GmbH+Co. KG, 70839 Gerlingen (DE)
(72) Erfinder: Robl, Stefan, 46569 Hünxe (DE); Ottersten, Bo, 93059 Regensburg (DE); Schmidt, Carsten, 35041 Marburg (DE)
(74) Vertreter: Andres, Angelika Maria

(57) **Zusammenfassung**

Die Erfindung betrifft eine Elektronikeinheit (110) mit einem Sensoranschluss (111) zum Empfangen von mindestens einem Messwert (M) von einem Sensor (120), einem ersten Datenspeicher (112), einem ersten Kommunikationsmodul (113), einer ersten Anzeigeeinheit (114) und einer ersten Eingabeeinheit (115),
wobei der erste Datenspeicher (112) eine Datei mit mindestens einer Messwertbezeichnung aufweist und das Speichern des Messwerts (M) ermöglicht,
wobei die erste Anzeigeeinheit (114) das Anzeigen der Messwertbezeichnung der Datei und des Messwerts (M) ermöglicht,
wobei die erste Eingabeeinheit (115) eine Zuweisung der Messwertbezeichung zum Messwert (M) ermöglicht.

## Beschreibung

Die Erfindung betrifft ein Messwertverarbeitungssystem und ein Messwertverarbeitungsverfahren.

In der Analysemesstechnik, insbesondere im Bereich der Wasserwirtschaft, der Umweltanalytik, im industriellen Bereich, z.B. in der Lebensmitteltechnik, der Biotechnologie und der Pharmazie, sowie für verschiedenste Laboranwendungen sind Messgrößen wie der pH-Wert, die Leitfähigkeit, oder auch die Konzentration von Analyten, wie beispielsweise Ionen oder gelösten Gasen in einem gasförmigen oder flüssigen Messmedium von großer Bedeutung. Diese Messgrößen können beispielsweise mittels elektrochemischer Sensoren erfasst und/oder überwacht werden, wie zum Beispiel optische, potentiometrische, amperometrische, voltammetrische oder coulometrische Sensoren, oder auch Leitfähigkeitssensoren.

Ein Sensor wird an einem Messort meist zusammen mit einem sogenannten Transmitter betrieben. Der Transmitter kann als tragbares Gerät ausgestaltet sein. In diesem Fall kommt der Transmitter samt Sensor an verschiedenen Messorten zum Einsatz. Der Transmitter ist dazu geeignet, die Rohdaten oder Signale des Sensors auszulesen und in Messwerte einer bestimmten Messgröße umzurechnen, sowie zu speichern und/oder an ein übergeordnetes System, etwa eine Leitstelle oder PC/Server zu übermitteln. Für die spätere Verarbeitung der Messwerte, zum Beispiel wenn ein Benutzer eine Messwertentwicklung an allen Messorten analysieren möchte, ist es vorteilhaft, wenn die Messwerte eine eindeutige und messortspezifische Bezeichnung bzw. Benennung aufweisen. Dies ermöglicht dem Benutzer beispielsweise verschiedene Messreihen nicht miteinander zu verwechseln. Bisher muss der Benutzer die Messwerte des Sensors, welche an einem bestimmten Messort ermittelt wurden, von Hand durch Eingabe einer Benennung der Messwerte am Transmitter vornehmen. Die üblicherweise verwendeten Transmitter weisen jedoch meist nur rudimentäre Eingabemöglichkeiten auf, so dass eine Eingabe einer Namensbezeichnung der Messwerte kompliziert und zeitaufwendig ist.

Es ist daher eine Aufgabe der Erfindung, eine Vorrichtung sowie ein Verfahren vorzuschlagen, welches ein einfaches und fehlerfreies Benennen von Messwerten ermöglicht.

Diese Aufgabe wird erfindungsgemäß gelöst durch eine Elektronikeinheit gemäß Anspruch 1.

Die erfindungsgemäße Elektronikeinheit umfasst einen Sensoranschluss zum Empfangen von mindestens einem Messwert von einem Sensor, einen ersten Datenspeicher, ein erstes Kommunikationsmodul, eine erste Anzeigeeinheit und eine erste Eingabeeinheit. Der erste Datenspeicher weist eine Datei mit mindestens einer Messwertbezeichnung auf und ist dazu geeignet, das Speichern des Messwerts zu ermöglichen. Die erste Anzeigeeinheit ist dazu geeignet, das Anzeigen der Messwertbezeichnung der Datei und des Messwerts zu ermöglichen. Die erste Eingabeeinheit ist dazu geeignet, eine Zuweisung der Messwertbezeichung zum Messwert zu ermöglichen.

Anhand der erfindungsgemäßen Elektronikeinheit wird ermöglicht, dass die Interaktionszeit beim Benennen der Messwerte durch einen Benutzer sehr stark reduziert werden kann, wodurch Komfort, Effizienz und Zuverlässigkeit der Messwertverarbeitung erhöht werden können.

Gemäß einer Ausführungsform der Erfindung umfasst die Elektronikeinheit des Weiteren eine Zeiteinheit, welche die aktuelle Zeit bereitstellt. Die Elektronikeinheit ist dazu geeignet, einen Zeitpunkt des Empfangs des Messwerts und die vom Benutzer durch die erste Eingabeeinheit vorgenommene Zuweisung der Messwertbezeichnung zum Messwert als Auswahlhistorie im ersten Datenspeicher zu speichern. Die Elektronikeinheit ist dazu geeignet, beim Empfangen eines weiteren Messwerts eine Messwertbezeichnung basierend auf der aktuellen Zeit und der Auswahlhistorie vorzuschlagen oder automatisch dem weiteren Messwert zuzuweisen.

Gemäß einer Ausführungsform der Erfindung weist die Elektronikeinheit des Weiteren eine Ortungseinheit auf, welche dazu geeignet ist, messwertspezifische Ortungsdaten zu generieren oder zu empfangen. Die Elektronikeinheit ist dazu geeignet, die mindestens eine Messwertbezeichnung dem mindestens einen Messwert abhängig von den messwertspezifischen Ortungsdaten automatisch zuzuweisen.

Gemäß einer Ausführungsform der Erfindung ist die Elektronikeinheit dazu geeignet, abhängig von einem Messwertbereich, welchem der empfangene Messwert zuordenbar ist, eine Messwertbezeichnung vorzuschlagen oder automatisch dem Messwert zuzuweisen.

Die erfindungsgemäße Aufgabe wird ferner gelöst durch eine Elektronikeinheit gemäß Anspruch 5.

Die erfindungsgemäße Elektronikeinheit umfasst einen Sensoranschluss zum Empfangen von mindestens einem Messwert von einem Sensor, einen ersten Datenspeicher, ein erstes Kommunikationsmodul und eine Ortungseinheit. Der erste Datenspeicher weist eine Datei mit mindestens einer Messwertbezeichnung auf und ermöglicht das Speichern des Messwerts. Die Ortungseinheit ist dazu geeignet, messwertspezifische Ortungsdaten zu generieren oder zu empfangen. Die Elektronikeinheit ist dazu geeignet, abhängig von den messwertspezifischen Ortungsdaten die mindestens eine Messwertbezeichnung dem mindestens einen Messwert automatisch zuzuweisen.

Die erfindungsgemäße Aufgabe wird ferner gelöst durch ein Messwertverarbeitungssystem gemäß Anspruch 6.

Das erfindungsgemäße Messwertverarbeitungssystem umfasst:
- eine erfindungsgemäße Elektronikeinheit,
- eine Recheneinheit mit einem zweiten Kommunikationsmodul und einer zweiten Eingabeeinheit. Die zweite Eingabeeinheit ermöglicht eine Eingabe mindestens einer Messwertbezeichnung. Das zweite Kommunikationsmodul ermöglicht das Senden der Messwertbezeichnung an die Elektronikeinheit.

Gemäß einer Ausführungsform der Erfindung umfasst die Recheneinheit eine Ortungseinheit, welche dazu geeignet ist, der Recheneinheit messwertspezifische Ortungsdaten bereitzustellen. Die Recheneinheit ist dazu geeignet, die messwertspezifischen Ortungsdaten durch das zweite Kommunikationsmodul an die Elektronikeinheit zu übermitteln, so dass die Elektronikeinheit dazu geeignet ist, die mindestens eine Messwertbezeichnung dem mindestens einen Messwert abhängig von den messwertspezifischen Ortungsdaten automatisch zuzuweisen.

Gemäß einer Ausführungsform der Erfindung ist die Ortungseinheit dazu geeignet, mit einem globalen Ortungssystem basierend auf GPS, Galileo, GLONASS, BeiDou oder mit einem lokalen Ortungssystem basierend auf Bluetooth beacon, Funkbaken oder LIDAR zu interagieren.

Die erfindungsgemäße Aufgabe wird des Weiteren durch ein Messwertverarbeitungsverfahren gemäß Anspruch 9 gelöst.

Das erfindungsgemäße Messwertverarbeitungsverfahren umfasst die folgenden Schritte:
- Bereitstellen einer erfindungsgemäßen Elektronikeinheit,
- Verbinden des Sensoranschlusses der Elektronikeinheit mit einem Sensor,
- Empfangen von mindestens einem Messwert von dem Sensor an der Elektronikeinheit,
- Speichern des Messwerts in dem ersten Datenspeicher,
- Laden der Datei mit mindestens einer Messwertbezeichnung aus dem ersten Datenspeicher,
- Anzeigen des Messwerts und der mindestens einen Messwertbezeichnung,
- Zuweisen der Messwertbezeichnung zum Messwert mittels der ersten Eingabeeinheit.

Gemäß einer Ausführungsform der Erfindung umfasst die Elektronikeinheit des Weiteren eine Zeiteinheit, welche die aktuelle Zeit bereitstellt. Die Elektronikeinheit speichert einen Zeitpunkt des Empfangs des Messwerts und die vom Benutzer durch die erste Eingabeeinheit vorgenommene Zuweisung der Messwertbezeichnung zum Messwert als Auswahlhistorie im ersten Datenspeicher. Die Elektronikeinheit schlägt beim Empfangen eines weiteren Messwerts eine Messwertbezeichnung basierend auf der aktuellen Zeit und der Auswahlhistorie vor oder weist die Messwertbezeichnung automatisch dem weiteren Messwert zu.

Gemäß einer Ausführungsform der Erfindung umfasst die Elektronikeinheit des Weiteren eine Ortungseinheit, welche messwertspezifische Ortungsdaten generiert oder empfängt, wobei die Elektronikeinheit die mindestens eine Messwertbezeichnung dem mindestens einen Messwert abhängig von den messwertspezifischen Ortungsdaten vorschlägt oder automatisch zuweist.

Gemäß einer Ausführungsform der Erfindung schlägt die Elektronikeinheit abhängig von einem Messwertbereich, welchem der empfangene Messwert zuordenbar ist, mithilfe einer Messwertbereichsdatei eine Messwertbezeichnung vor oder weist die Messwertbezeichnung automatisch dem Messwert zu.

Die erfindungsgemäße Aufgabe wird des Weiteren durch ein Messwertverarbeitungsverfahren gemäß Anspruch 13 gelöst.

Das erfindungsgemäße Messwertverarbeitungsverfahren umfasst die folgenden Schritte:
- Bereitstellen einer erfindungsgemäßen Elektronikeinheit;
- Verbinden des Sensoranschlusses der Elektronikeinheit mit einem Sensor,
- Empfangen von mindestens einem Messwert von dem Sensor an der Elektronikeinheit,
- Speichern des Messwerts in dem ersten Datenspeicher,
- Generieren oder Empfangen von messwertspezifischen Ortungsdaten durch die Ortungseinheit,
- Laden der Datei mit mindestens einer Messwertbezeichnung aus dem ersten Datenspeicher,
- Automatisches Zuweisen der Messwertbezeichnung zum Messwert abhängig von den messwertspezifischen Ortungsdaten.

Die erfindungsgemäße Aufgabe wird des Weiteren durch ein Messwertverarbeitungsverfahren gemäß Anspruch 14 gelöst.

Das erfindungsgemäße Messwertverarbeitungsverfahren umfasst die folgenden Schritte:
- Bereitstellen eines erfindungsgemäßen Messwertverarbeitungssystems,
- Verbinden des Sensoranschlusses der Elektronikeinheit mit einem Sensor,
- Empfangen von mindestens einem Messwert von dem Sensor an der Elektronikeinheit,
- Speichern des Messwerts in dem ersten Datenspeicher,
- Eingabe mindestens einer Messwertbezeichnung an der zweiten Eingabeeinheit der Recheneinheit,
- Senden der Messwertbezeichnung durch das zweite Kommunikationsmodul der Recheneinheit an die Elektronikeinheit,
- Anzeigen des Messwerts und der mindestens einen Messwertbezeichnung,
- Zuweisen der Messwertbezeichnung zum Messwert mittels der ersten Eingabeeinheit.

Die Erfindung wird anhand der nachfolgenden Figurenbeschreibung näher erläutert. Es zeigen:
- Fig. 1: eine schematische Darstellung eines erfindungsgemäßen Messwertverarbeitungssystems,
- Fig. 2: eine schematische Darstellung einer alternativen Ausführungsform des Messwertverarbeitungssystems aus Figur 1,
- Fig. 3: eine schematische Darstellung einer alternativen Ausführungsform des Messwertverarbeitungssystems Figur 2,
- Fig. 4: eine schematische Darstellung einer erfindungsgemäßen Elektronikeinheit mit einer Ortungseinheit,
- Fig. 5: eine schematische Darstellung einer alternativen Ausführungsform der Elektronikeinheit aus Figur 4.

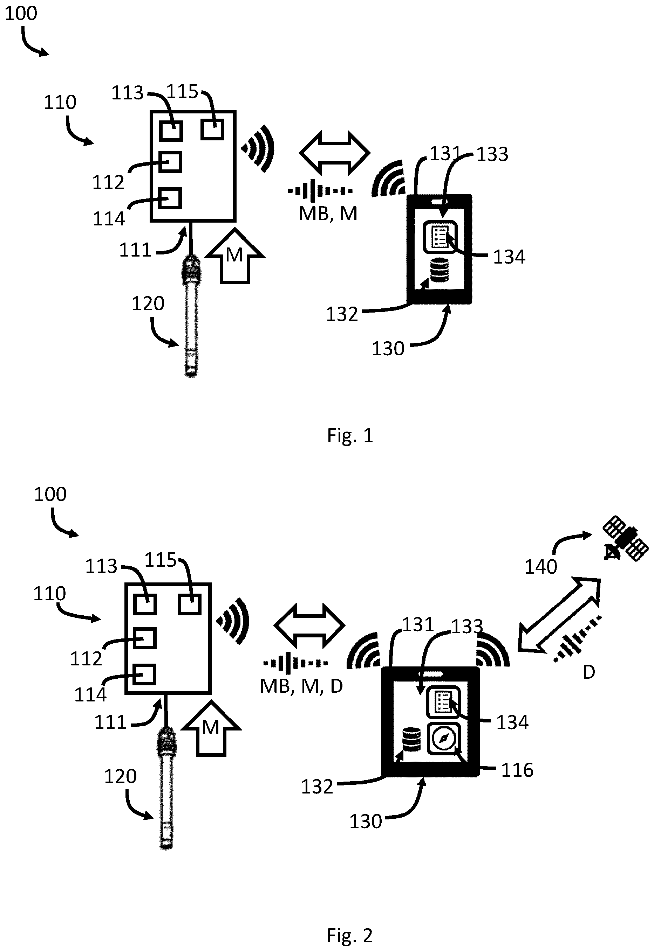

Figur 1 zeigt eine Ausführungsform eines erfindungsgemäßen Messwertverarbeitungssystems 1 mit einer Elektronikeinheit 110 und einer Recheneinheit 130.

Die Elektronikeinheit 110 weist einen Sensoranschluss 111 auf, an welchen ein Sensor 120 anschließbar ist. Die Elektronikeinheit 110 kann somit mindestens einen Messwert M von dem Sensor 120 empfangen. Der Sensoranschluss 111 ist beispielsweise ein elektrischer Steckverbinder, welcher einen über ein Kabel verbundenen Sensor 120 mit der Elektronikeinheit 110 verbindbar macht. Es ist auch möglich, dass der Sensoranschluss 111 eine Verbindungseinheit darstellt, die den zu verbindenden Sensor 120 direkt mechanisch an den Sensoranschluss 111 einrasten lässt. Ein Beispiel hierfür ist die Memosens-Schnittstelle der Anmelderin, welcher eine mechanische Bajonettkupplung sowie eine induktive Daten- und Energieübertragung umfasst.

Der Sensor 120 ist beispielsweise ein pH-Sensor, Sauerstoff-Sensor, Chlordioxyd-Sensor oder ein ähnlicher Sensor. Unter Messwert M wird vor allem ein vom Sensor 120 gemessener Wert, also zum Beispiel ein gemessener pH-Wert, Sauerstoff-Gehalt, Chlordioxyd-Gehalt, oder andere Parameter eines Messmediums verstanden. Der Einfachheit halber wird im Folgenden von einem Messwert M gesprochen. Selbstverständlich können jedoch auch mehrere Messwerte M anstelle des einen Messwerts M gemeint sein, soweit dies technisch möglich ist.

Die Elektronikeinheit 110 weist des Weiteren einen ersten Datenspeicher 112 auf. Der erste Datenspeicher 112 umfasst beispielsweise einen fest in der Elektronikeinheit 110 eingebauten Speicher oder eine wechselbare Speicherkarte. Der erste Datenspeicher 112 kann beispielsweise als Dateisystem oder als Flashspeicher aufgebaut sein. Der erste Datenspeicher 112 ist dazu geeignet, ein Datum, also eine Information, in einem definierten Speicherbereich des Datenspeichers 112 zu hinterlegen. Wenn im Folgenden von "Datei", "Messwertbereichsdatei" oder "Positionsdatei" die Rede ist, so ist dieser Begriff nicht nur in Verbindung mit einem Dateisystem zu verstehen, sondern auch als eine Information, welche an einer vorbestimmten Speicheradresse im Datenspeicher 112 hinterlegt ist, bzw. vom Datenspeicher 112 beinhaltet ist.

Die Elektronikeinheit 110 weist des Weiteren ein erstes Kommunikationsmodul 113 zum Senden und/oder zum Empfangen von Daten auf. Beispielsweise ist das erste Kommunikationsmodul 113 dazu geeignet, den Messwert M an die Recheneinheit 130 zu senden und/oder eine Messwertbezeichnung MB von der Recheneinheit 130 zu empfangen. Das erste Kommunikationsmodul 113 umfasst beispielsweise ein Bluetooth-Modul, ein WLAN-Modul oder ein anderes drahtloses Kommunikationsmodul.

Die Elektronikeinheit 110 weist des Weiteren eine erste Anzeigeeinheit 114 auf. Die erste Anzeigeeinheit 114 ermöglicht das Anzeigen von zum Beispiel der Messwertbezeichnung MB, einer Liste an Messwertbezeichnungen MB oder dem Messwert M. Die erste Anzeigeeinheit 114 umfasst beispielsweise ein LCD-Display oder ein ähnliches Display.

Die Elektronikeinheit 110 weist des Weiteren eine erste Eingabeeinheit 115 auf. Die erste Eingabeeinheit 115 ermöglicht das Auswählen von zum Beispiel einer Messwertbezeichnung MB und das Zuweisen der ausgewählten Messwertbezeichnung MB an einen Messwert M oder eine Reihe an Messwerten M. Die erste Eingabeeinheit 115 umfasst beispielsweise ein oder mehrere Druck- und/oder Drehknöpfe.

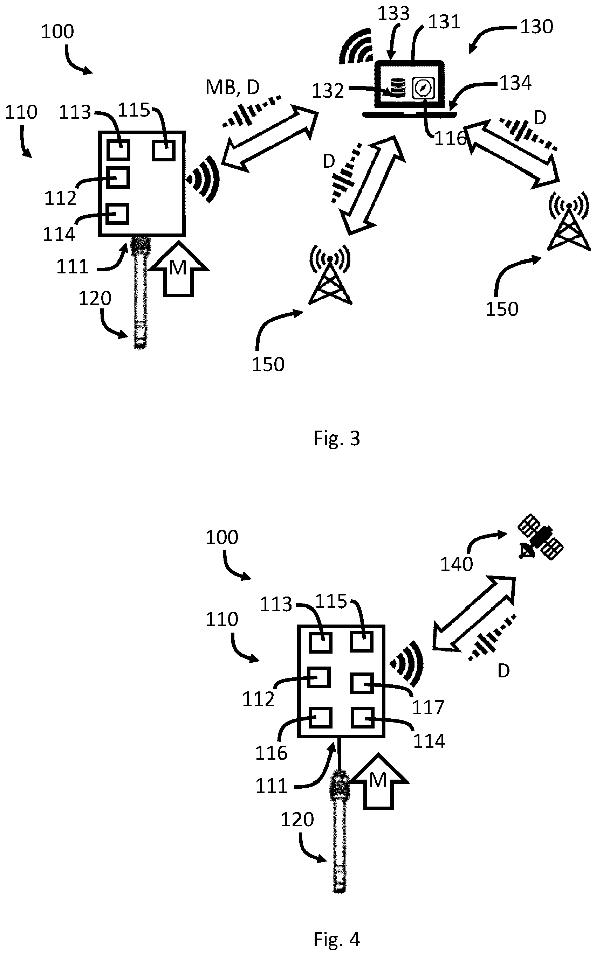

Die Recheneinheit 130 umfasst beispielsweise ein Smartphone, ein Tablet (siehe Figur 1 oder Figur 2), ein Laptop, PC/Mac (siehe Figur 3) oder ein anderes intelligentes System, welches zur Kommunikation mit dem ersten Kommunikationsmodul 113 geeignet ist. Die Recheneinheit 130 umfasst ein zweites Kommunikationsmodul 131, einen zweiten Datenspeicher 132, eine zweite Anzeigeeinheit 133 und eine zweite Eingabeeinheit 134.

Das zweite Kommunikationsmodul 131 ist vorzugsweise mit dem ersten Kommunikationsmodul 113 funktionsgleich, oder ist zumindest dazu geeignet, mit dem ersten Kommunikationsmodul 113 zu kommunizieren.

Die zweite Eingabeeinheit 134 ist dazu geeignet, eine alphanumerische Eingabe einer Messwertbezeichnung MB zu ermöglichen. Die zweite Eingabeeinheit 134 umfasst zum Beispiel eine Tastatur oder einen taktilen Bildschirm, bzw. Touchscreen. Ist die zweite Eingabeeinheit 134 ein Touchscreen, so ist selbstverständlich die zweite Anzeigeeinheit 133 auch gleichzeitig die zweite Eingabeeinheit 134. Die zweite Eingabeeinheit 134 ist dazu geeignet, dass ein Benutzer eine Messwertbezeichnung MB eingibt, um diese der Elektronikeinheit 110 über das zweite Kommunikationsmodul 131 zur Verfügung zu stellen.

Die zweite Anzeigeeinheit 133 ermöglicht das Anzeigen der eingegebenen Messwertbezeichnung MB oder einer eingegebenen Liste mit Messwertbezeichnungen MB. Die zweite Anzeigeeinheit 133 ist ebenso dazu geeignet, von der Elektronikeinheit 110 empfangene Messwerte M anzuzeigen.

Der zweite Datenspeicher 132 ist dazu geeignet, Messwertbezeichnungen MB und/oder Messwert M abzuspeichern.

Somit ist es möglich, mittels der Recheneinheit 130 eine Messwertbezeichnung MB zu erstellen und an die Elektronikeinheit 110 zu senden. Der Benutzer kann anschließend an der Elektronikeinheit 110 die Messwertbezeichnung MB dem Messwert M zuweisen. Auf das Verfahren zur Benennung des Messwerts wird später eingegangen.

Figur 2 und Figur 3 zeigen jeweils eine zur oben beschriebenen Ausführungsform komplementäre Ausführungsform des Messwertverarbeitungssystems 1. Hier weist die Recheneinheit 130 zusätzlich eine Ortungseinheit 116 auf. Die Ortungseinheit 116 ist dazu geeignet, mit einem globalen Ortungssystem 140 (siehe Figur 2) basierend auf GPS, Galileo, GLONASS, BeiDou oder mit einem lokalen Ortungssystem 15 (siehe Figur 3) basierend auf Bluetooth beacon, Funkbaken oder LIDAR zu interagieren, um messwertspezifische Ortungsdaten D zu generieren oder zu empfangen. Unter messwertspezifischen Ortungsdaten D werden insbesondere geographische Koordinaten oder andere geographische Informationen verstanden.

Im Falle eines lokalen Ortungssystems 140 kann beispielsweise von einer Funkbake eine statische Ortsinformation abgestrahlt, also gesendet, werden. Die Ortungseinheit 116 kann dann, abhängig von der Signalstärke der vom lokalen Ortungssystem 140 abgestrahlten Signal, erkennen, in welcher Entfernung das lokale Ortungssystem 140 relativ zur Ortungseinheit 116 positioniert ist. Die Ortungseinheit 116 umfasst entweder eine Information, wo das lokale Ortungssystem 140 positioniert ist, oder diese Information wird vom lokalen Ortungssystem 140 über die statische Ortsinformation an die Ortungseinheit 116 übermittelt. Bei mehreren Funkbaken kann sich die Ortungseinheit 116 somit sehr genau die eigene Position relativ zu den Funkbaken errechnen, also generieren. Empfängt die Ortungseinheit 116 Signale von drei Funkbaken, so ist eine 3-dimensionale Ortung für die Ortungseinheit 116 möglich. Falls eine Funkbake bzw. Beacon in einem geschlossenen Raum, welcher ein Messort umfasst, aufweist, so lässt sich für die Ortungseinheit 116 beispielsweise für diesen Messort messwertspezifische Ortungsdaten D generieren.

Die Recheneinheit 130 ist des Weiteren dazu geeignet, der Elektronikeinheit 110 die messwertspezifischen Ortungsdaten D über das das zweite Kommunikationsmodul 131 bereitzustellen. Somit wird der Elektronikeinheit 110 ermöglicht, eine Messwertbezeichnung MB dem Messwert M abhängig von den messwertspezifischen Ortungsdaten D automatisch zuzuweisen oder zur Zuweisung vorzuschlagen.

Selbstverständlich kann die Elektronikeinheit 110 auch eine Ortungseinheit 116 aufweisen, welche dazu geeignet ist, mit einem globalen Ortungssystem 140 sowie mit einem lokalen Ortungssystem 15 zu interagieren.

Wenn der Elektronikeinheit 110 mehre Messwertbezeichnungen MB, beispielsweise in Form einer Liste vorliegen, so ist die Elektronikeinheit 110 dazu geeignet, die Liste mit Messwertbezeichnungen MB abhängig von den messwertspezifischen Ortungsdaten D zu ordnen. In diesem Fall liegt verfügt der erste Datenspeicher 112 der Elektronikeinheit 110 über eine Positionsdatei, in welcher zu jedem in der Liste gespeicherten Messwertbezeichnung MB jeweils eine Position hinterlegt ist. Die Elektronikeinheit 110 ist dazu geeignet, die jeweiligen Positionen der Messwertbezeichnungen MB mit den messwertspezifische Ortungsdaten D zu vergleichen und die Messwertbezeichnung MB, die zur Position, welche am besten mit den messwertspezifischen Ortungsdaten D korreliert, automatisch dem Messwert M zuzuweisen.

Anstatt der automatischen Zuweisung kann die Elektronikeinheit 110 auch abhängig von den messwertspezifischen Ortungsdaten D eine Messwertbezeichnung MB vorschlagen, so dass der Benutzer nur noch über die erste Eingabeeinheit 115 die Zuweisung der Messwertbezeichnung MB zu dem Messwert M bestätigen muss.

Somit wird ermöglicht, dem Benutzer mit möglichst wenig Aufwand eine spezifische Messwertbezeichnung dem Messwert M zuzuweisen, bzw. die Datensätze des Messwerts M spezifisch zu benennen.

Figur 4 zeigt eine mit den zuvor beschriebenen Ausführungsformen kompatible Ausführungsform in welcher die Elektronikeinheit 110 eine Zeiteinheit 117 umfasst. Die Zeiteinheit 117 ist beispielsweise eine Uhr oder ein anderes Gerät, um Zeit zu messen. Die Zeiteinheit 117 ist dazu geeignet, die aktuelle Zeit, also das aktuelle Datum und/oder Uhrzeit, bereitzustellen. Durch die Zeiteinheit 117 wird es der Elektronikeinheit 110 ermöglicht, zu jedem empfangen Messwert M die Zeit des Empfangs abzuspeichern. Ebenso ist die Elektronikeinheit 110 dazu geeignet, eine Auswahlhistorie zu den Messwerten M zu erstellen. Dies bedeutet, dass eine Tabelle mit den empfangenen Messwerten M, den zugehörigen Zeitpunkten des Empfangs und den jeweils ausgewählten Messwertbezeichnung MB erstellt wird. Somit ist die Elektronikeinheit 110 dazu geeignet, beim Empfangen eines weiteren Messwerts M vom Sensor 120 eine Messwertbezeichnung MB basierend auf der aktuellen Uhrzeit und der Auswahlhistorie vorzuschlagen.

Wie in Figur 4 dargestellt, ist in dieser Ausführungsform keine Recheneinheit 130 zur Eingabe einer Messwertbezeichnung MB notwendig. In dieser Ausführungsform umfasst der erste Datenspeicher 112 eine Datei mit mindestens einer Messwertbezeichnung MB. Durch die oben beschriebene Ortungseinheit 116 ist die Elektronikeinheit 110 dazu geeignet, automatisch eine Zuweisung der Messwertbezeichnung MB zum Messwert M vorzunehmen oder zur Zuweisung vorzuschlagen. Die Datei ist beispielsweise schon von Werk ab im ersten Datenspeicher 112 hinterlegt. Die in der Datei hinterlegten Messwertbezeichnungen MB weisen beispielsweise einen funktionell aussagekräftigen Begriff auf. Beispiele sind: "Einlass Frischwasser", "Klärbecken 1", "Auslass Klärbecken 1", usw.

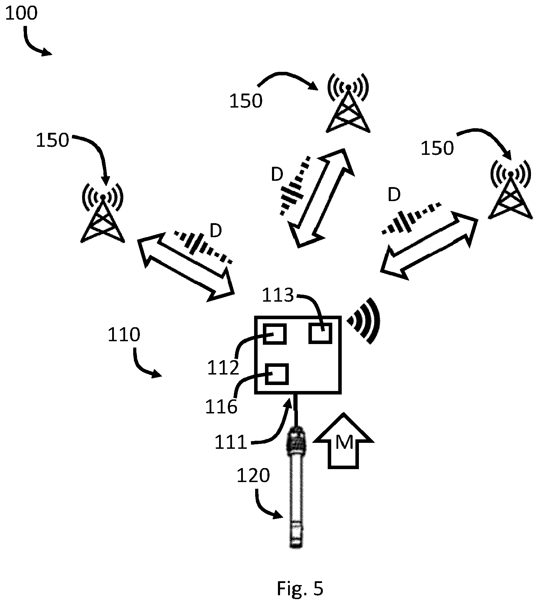

Wie in Figur 5 dargestellt, ist in dieser Ausführungsform weder eine erste Anzeigeeinheit 114 noch eine erste Eingabeeinheit 115 notwendig, da die Messwertbezeichnung MB aus der in dem ersten Datenspeicher 112 abgelegten Datei mit Messwertbezeichnungen MB geladen werden können und die Zuweisung der Messwertbezeichnung MB zu dem Messwert M automatisch mittels der Ortungseinheit 116 geschieht. Selbstverständlich könnte zur Kontrolle der automatischen Zuweisung eine erste Anzeigeeinheit 114 und erste Eingabeeinheit 115 vorhanden sein.

Vorteilhafterweise ist die Elektronikeinheit 110 bei allen oben beschriebenen Ausführungsformen dazu geeignet, abhängig von einem Messwertbereich, welchem der empfangene Messwert M zuordenbar ist, eine Messwertbezeichnung MB dem Benutzer zur Auswahl vorzuschlagen, oder die Messwertbezeichnung MB automatisch dem Messwert M zuzuweisen. Der erste Datenspeicher 112 weist eine Messwertbereichsdatei auf, in welcher verschiedene Messwertbereiche jeweils mit verschiedenen Messwertbezeichnungen MB verknüpft aufgelistet sind. Somit ist es für die Elektronikeinheit 110 möglich, den Messwert M mit den Messwertbereichen der Messwertbereichsdatei zu vergleichen und die Messwertbezeichnung MB, welche mit dem zutreffenden Messwertbereich verknüpft ist, dem Messwert M beispielsweise automatisch zuzuweisen. Die Messwertbereichsdatei kann auch weitere Informationen mit den verschiedenen Messwertbezeichnungen MB verknüpfen, wie zum Beispiel einen Temperaturbereich. In diesem Fall umfasst der Messwert M mehrere Untermesswerte, wie beispielsweise pH und Temperatur des Messmediums. Damit eine Messwertbezeichnung MB in diesem Fall einem Messwert M zugewiesen wird, muss der Messwert M in einem vorbestimmten pH Messwerbereich und Temperaturbereich liegen.

Im Folgenden wird auf das erfindungsgemäße Messwertverarbeitungsverfahren im Detail eingegangen.

Gemäß einer ersten Ausführungsform, welche im Folgenden "manuelles Verfahren" genannt wird, wird in einem ersten impliziten Schritt das oben beschriebene Messwertverarbeitungssystem 100 bereitgestellt. Unter Bereitstellen wird hier verstanden, dass das Messwertverarbeitungssystem 100 funktionsbereit ist.

Dann wird, wie in Figur 1 ersichtlich, ein Sensor 120 über den Sensoranschluss 111 mit der Elektronikeinheit 110 verbunden und mindestens ein Messwert M von dem Sensor 120 empfangen. Anschließend wird der Messwert M in dem ersten Datenspeicher 112 der Elektronikeinheit 110 abgespeichert.

In einem nächsten Schritt wird eine Messwertbezeichnung MB oder eine Vielzahl an Messwertbezeichnungen MB durch eine Eingabe des Benutzers mittels der zweiten Eingabeeinheit 134 an der Recheneinheit 130 erstellt, also beispielsweise manuell eingegeben. Der Benutzer kann sich die Messwertbezeichnung MB zur Überprüfung der Eingabe mittels der zweiten Anzeigeeinheit 133 anzeigen lassen und gegebenenfalls durch die zweite Eingabeeinheit 134 korrigieren.

Die eingegebene Messwertbezeichnung MB bzw. Messwertbezeichnungen MB wird anschließend durch das zweite Kommunikationsmodul 131 von der Recheneinheit 130 an das erste Kommunikationsmodul 113 der Elektronikeinheit 110 gesendet. Es ist auch möglich, den Messwert M oder mehrere Messwerte M von der Elektronikeinheit 110 an die Recheneinheit 130 zu senden.

Als nächstes wird der Messwert M und die Messwertbezeichnung MB an der ersten Anzeigeeinheit 114 der Elektronikeinheit 110 angezeigt. Wenn mehrere Messwertbezeichnungen MB erstellt und an die Elektronikeinheit 110 übermittelt wurden, so können die Messwertbezeichnungen MB an der ersten Anzeigeeinheit 114 in Form einer Liste angezeigt werden. Dies ermöglicht es dem Benutzer eine geeignete Messwertbezeichnung MB für den Messwert M auszuwählen. Der Benutzer weist dann eine Messwertbezeichnung MB dem Messwert M mittels der ersten Eingabeeinheit 115 an der Elektronikeinheit 110 zu.

Die in Figur 2 und Figur 3 dargestellten Ausführungsformen, welche im Folgenden "automatisches Verfahren" bzw. "halbautomatisches Verfahren" genannt werden, unterscheidet sich von dem oben beschriebenen manuellen Verfahren insofern, dass zusätzlich die Ortungseinheit 116 der Recheneinheit 130 Anwendung findet: In einem zusätzlichen Verfahrensschritt empfängt die Ortungseinheit 116 messwertspezifische Ortungsdaten D von einem globalen Ortungssystem 140 (siehe Figur 2) oder von einem lokalen Ortungssystem 15 (siehe Figur 3). Anschließend übermittelt die Recheneinheit 130 die messwertspezifischen Ortungsdaten D an die Elektronikeinheit 110.

Dank der messwertspezifischen Ortungsdaten D ist es möglich, den oben beschriebenen Schritt des Zuweisens durch eine Eingabe des Benutzers an der ersten Eingabeeinheit 115 durch eine halb- oder voll- automatische Zuweisung der Messwertbezeichnung MB zum Messwert M basierend auf den messwertspezifischen Ortungsdaten D zu ersetzten. Unter halbautomatisch wird verstanden, dass der Benutzer eine von der Elektronikeinheit 110 vorgeschlagene Messwertbezeichnung MB bestätigen muss. Unter vollautomatisch wird verstanden, dass der Benutzer eine vorgeschlagene Messwertbezeichnung MB nicht mehr bestätigen muss.

Eine Zuweisung basierend auf den messwertspezifischen Ortungsdaten D setzt voraus, dass die Elektronikeinheit 110 eine Positionsdatei im ersten Datenspeicher 112 aufweist. In der Positionsdatei sind verschiedene Positionsdaten sowie eine mit den jeweiligen Positionsdaten verknüpfte Messwertbezeichnung MB vorhanden.

Empfängt nun die Elektronikeinheit 110 messwertspezifische Ortungsdaten D von der Recheneinheit 130, so vergleicht die Elektronikeinheit 110 die empfangenen messwertspezifischen Ortungsdaten D mit den Positionsdaten der Positionsdatei. Die Messwertbezeichnung MB, die mit Positionsdaten verknüpft ist, welche den messwertspezifischen Ortungsdaten D am nächsten kommt, wird dann von der Elektronikeinheit 110 verwendet, um dem Messwert M die Messwertbezeichnung MB zuzuweisen.

Bei einer automatischen Zuweisung der Messwertbezeichnung MB zum Messwert M ist der oben beschriebene Schritt der Eingabe einer Messwertbezeichnung MB und Übermittlung der Messwertbezeichnung MB an die Elektronikeinheit 110, der Schritt des Anzeigens des Messwerts M und der Messwertbezeichnung MB sowie der Schritt des Zuweisens der Messwertbezeichnung MB zum Messwert M mittels der ersten Eingabeeinheit 115 nicht mehr notwendig. Der Benutzer gewinnt bei dieser vollautomatischen Variante somit erheblich an Bedienkomfort.

Alternativ zur automatischen Zuweisung basierend auf den messwertspezifischen Ortungsdaten D, kann die von der Elektronikeinheit 110 ausgewählte Messwertbezeichnung MB auch nur dem Benutzer vorgeschlagen werden, um eine Prüfung der Zuweisung durch den Benutzer zu erreichen. Bei dieser halb-automatischen Variante des Verfahrens entfällt also nur der Schritt des Eingebens einer Messwertbezeichnung MB und der Schritt des Sendens der Messwertbezeichnung MB an die Elektronikeinheit 110.

Die in Figur 4 und Figur 5 dargestellte Variante unterscheidet sich von den zuvor beschriebenen dahingehend, dass die Ortungseinheit 116 in der Elektronikeinheit 110 angeordnet ist. Somit ist keine Recheneinheit 130 notwendig. Es wird also als erster impliziter Schritt nur die Elektronikeinheit 110 bereitgestellt und über den Sensoranschluss 111 ein Messwert M von dem Sensor 120 an der Elektronikeinheit 110 empfangen und im ersten Datenspeicher 112 gespeichert. Dem Messwert M wird dann abhängig von den messwertspezifischen Ortungsdaten D eine Messwertbezeichnung MB zugewiesen.

Der oben beschriebene Schritt des Empfangens von messwertspezifischen Ortungsdaten D durch die Ortungseinheit 116 von einem globalen Ortungssystem 140 (siehe Figur 4) oder von einem lokalen Ortungssystem 15 (siehe Figur 5) geschieht also in der Elektronikeinheit 110. Somit entfällt selbstverständlich der oben beschriebene Schritt des Übermittelns der messwertspezifischen Ortungsdaten D an die Elektronikeinheit 110.

Alternativ zur Verwendung der Ortungseinheit 116 kann die Elektronikeinheit 110 eine Datei im ersten Datenspeicher 112 aufweisen, in welcher mindestens eine Messwertbezeichnung MB vorhanden ist. In diesem Fall wird als erster impliziter Schritt die Elektronikeinheit 110 mit der Datei im ersten Datenspeicher 112 bereitgestellt. Dann wird die Elektronikeinheit 110 mit dem Sensor 120 über den Sensoranschluss 111 verbunden und ein Messwert M geladen. Als nächstes wird die Datei mit der Messwertbezeichnung MB geladen. Der Messwert M und die Messwertbezeichnung MB werden anschließend an der ersten Anzeigeeinheit 114 angezeigt. Vom Benutzer wird letztlich die Messwertbezeichnung MB oder eine der Messwertbezeichnungen MB, falls mehrere Messwertbezeichnungen MB durch die Datei geladen wurden, dem Messwert M zugewiesen.

Gemäß einer Ausführungsform schlägt die Recheneinheit 130 beim Schritt des Zuweisens einer Messwertbezeichnung die Messwertbezeichnung abhängig von einem Messwertbereich, welchem der empfangene Messwert zuordenbar ist, vor. Wird beispielsweise ein Messwert M von einem pH-Sensor von der Recheneinheit 130 verarbeitet, und der Messwert M ist in einem pH-Bereich zwischen 6 und 8 und weist eine Temperatur zwischen 5°C und 10°C auf, so wird dem Messwert M die Messwerbezeichnung "Einlassbecken Kläranlage 1" zugeordnet. Befindet sich der Messwert M jedoch in einem pH-Bereich zwischen 3 und 9 und weist eine Temperatur zwischen 15°C und 20°C auf, so wird dem Messwert M die Messwerbezeichnung "Auslassbecken Kläranlage 1" zugeordnet.

Gemäß einer Ausführungsform weist die Elektronikeinheit 110 des Weiteren eine Zeiteinheit 117 auf, welche die aktuelle Zeit bereitstellt. In dieser Ausführungsform speichert die Elektronikeinheit 110 beim Schritt des Empfangens des Messwerts M vom Sensor 120 zusätzlich den Zeitpunkt des Empfangs des Messwerts M sowie die später vom Benutzer durch die erste Eingabeeinheit 115 vorgenommene Zuweisung der Messwertbezeichnung MB zum Messwert M als Auswahlhistorie im ersten Datenspeicher 112 ab. Wird später ein weiterer Messwert M vom Sensor 120 empfangen, so schlägt die Elektronikeinheit 110 basierend auf der aktuellen Zeit und der Auswahlhistorie eine Messwertbezeichnung MB vor, oder weist diese automatisch dem weiteren Messwert M zu. Dieser Fall ist besonders vorteilhaft, wenn ein Benutzer zu regelmäßigen und gleichbleibenden Zeitpunkten Messungen mit der Elektronikeinheit 110 und dem Sensor 120 vornimmt. Werden also vom Benutzer verschiedene Messorte in einer gleichbleibenden Reihenfolge und/oder zu einer ähnlichen Uhrzeit besucht, so ermöglicht die Auswahlhistorie eine effiziente Messwertbezeichnung MB Zuweisung.

In allen Ausführungsformen kann der Schritt des Empfangens des mindestens einem Messwert M von dem Sensor 120 durch eine Benutzereingabe an der ersten Eingabeeinheit 115 ausgelöst werden. Somit kann beispielsweise der Benutzer bewusst eine Messung vornehmen und diese direkt an die Elektronikeinheit 110 senden.

### Bezugszeichenliste

- 100: Messwertverarbeitungssystem

- 110: Elektronikeinheit
- 111: Sensoranschluss
- 112: erster Datenspeicher
- 113: erstes Kommunikationsmodul
- 114: erste Anzeigeeinheit
- 115: erste Eingabeeinheit
- 116: Ortungseinheit
- 117: Zeiteinheit

- 120: Sensor

- 130: Recheneinheit
- 131: zweites Kommunikationsmodul
- 132: zweiter Datenspeicher
- 133: zweite Anzeigeeinheit
- 134: zweite Eingabeeinheit

- 140: globales Ortungssystem
- 150: lokales Ortungssystem

- M: Messwert
- MB: Messwertbezeichnung
- D: messwertspezifische Ortungsdaten

## Patentansprüche

1. Elektronikeinheit (110) mit einem Sensoranschluss (111) zum Empfangen von mindestens einem Messwert (M) von einem Sensor (120), einem ersten Datenspeicher (112), einem ersten Kommunikationsmodul (113), einer ersten Anzeigeeinheit (114) und einer ersten Eingabeeinheit (115),
wobei der erste Datenspeicher (112) eine Datei mit mindestens einer Messwertbezeichnung (MB) aufweist und das Speichern des Messwerts (M) ermöglicht,
wobei die erste Anzeigeeinheit (114) das Anzeigen der Messwertbezeichnung (MB) der Datei und des Messwerts (M) ermöglicht,
wobei die erste Eingabeeinheit (115) eine Zuweisung der Messwertbezeichung (MB) zum Messwert (M) ermöglicht.

2. Elektronikeinheit (110) gemäß Anspruch 1, wobei die Elektronikeinheit (110) des Weiteren eine Zeiteinheit (117) umfasst, welche die aktuelle Zeit bereitstellt,
wobei die Elektronikeinheit (110) dazu geeignet ist, einen Zeitpunkt des Empfangs des Messwerts (M) und die vom Benutzer durch die erste Eingabeeinheit (115) vorgenommene Zuweisung der Messwertbezeichnung (MB) zum Messwert (M) als Auswahlhistorie im ersten Datenspeicher (112) zu speichern,
wobei die Elektronikeinheit (110) dazu geeignet ist, beim Empfangen eines weiteren Messwerts (M) eine Messwertbezeichnung (MB) basierend auf der aktuellen Zeit und der Auswahlhistorie vorzuschlagen oder automatisch dem weiteren Messwert (M) zuzuweisen.

3. Elektronikeinheit (110) gemäß Anspruch 1 oder 2, wobei die Elektronikeinheit (110) des Weiteren eine Ortungseinheit (116) aufweist, welche dazu geeignet ist, messwertspezifische Ortungsdaten (D) zu generieren oder zu empfangen,
wobei die Elektronikeinheit (110) dazu geeignet ist, die mindestens eine Messwertbezeichnung (MB) dem mindestens einen Messwert (M) abhängig von den messwertspezifischen Ortungsdaten (D) automatisch zuzuweisen.

4. Elektronikeinheit (110) gemäß einem der Ansprüche 1 bis 3, wobei die Elektronikeinheit (110) dazu geeignet ist, abhängig von einem Messwertbereich, welchem der empfangene Messwert (M) zuordenbar ist, eine Messwertbezeichnung (MB) vorzuschlagen oder automatisch dem Messwert (M) zuzuweisen.

5. Elektronikeinheit (110) mit einem Sensoranschluss (111) zum Empfangen von mindestens einem Messwert (M) von einem Sensor (120), einem ersten Datenspeicher (112), einem ersten Kommunikationsmodul (113) und einer Ortungseinheit (116),
wobei der erste Datenspeicher (112) eine Datei mit mindestens einer Messwertbezeichnung (MB) aufweist und das Speichern des Messwerts (M) ermöglicht,
wobei die Ortungseinheit (116) dazu geeignet ist, messwertspezifische Ortungsdaten (D) zu generieren oder zu empfangen,
wobei die Elektronikeinheit (110) dazu geeignet ist, abhängig von den messwertspezifischen Ortungsdaten (D) die mindestens eine Messwertbezeichnung (MB) dem mindestens einen Messwert (M) automatisch zuzuweisen.

6. Messwertverarbeitungssystem (100) umfassend:
- eine Elektronikeinheit (110) gemäß einem der vorhergehenden Ansprüche,
- eine Recheneinheit (130) mit einem zweiten Kommunikationsmodul (131) und einer zweiten Eingabeeinheit (134),
wobei die zweite Eingabeeinheit (134) eine Eingabe mindestens einer Messwertbezeichnung (MB) ermöglicht,
wobei das zweite Kommunikationsmodul (131) das Senden der Messwertbezeichnung (MB) an die Elektronikeinheit (110) ermöglicht.

7. Messwertverarbeitungssystem (100) gemäß Anspruch 6, wobei die Recheneinheit (130) eine Ortungseinheit (116) umfasst, welche dazu geeignet ist, der Recheneinheit (130) messwertspezifische Ortungsdaten (D) bereitzustellen,
wobei die Recheneinheit (130) dazu geeignet ist, die messwertspezifischen Ortungsdaten (D) durch das zweite Kommunikationsmodul (131) an die Elektronikeinheit (110) zu übermitteln, so dass die Elektronikeinheit (110) dazu geeignet ist, die mindestens eine Messwertbezeichnung (MB) dem mindestens einen Messwert (M) abhängig von den messwertspezifischen Ortungsdaten (D) automatisch zuzuweisen.

8. Messwertverarbeitungssystem (100) gemäß Anspruch 7, wobei die Ortungseinheit (116) dazu geeignet ist, mit einem globalen Ortungssystem (140) basierend auf GPS, Galileo, GLONASS, BeiDou oder mit einem lokalen Ortungssystem (150) basierend auf Bluetooth beacon, Funkbaken oder LIDAR zu interagieren.

9. Messwertverarbeitungsverfahren umfassend die folgenden Schritte:
- Bereitstellen einer Elektronikeinheit (110) gemäß einem der Ansprüche 1 bis 4,
- Verbinden des Sensoranschlusses (111) der Elektronikeinheit (110) mit einem Sensor (120),
- Empfangen von mindestens einem Messwert (M) von dem Sensor (120) an der Elektronikeinheit (110),
- Speichern des Messwerts (M) in dem ersten Datenspeicher (112),
- Laden der Datei mit mindestens einer Messwertbezeichnung (MB) aus dem ersten Datenspeicher (112),
- Anzeigen des Messwerts (M) und der mindestens einen Messwertbezeichnung (MB),
- Zuweisen der Messwertbezeichnung (MB) zum Messwert (M) mittels der ersten Eingabeeinheit (115).

10. Messwertverarbeitungsverfahren gemäß Anspruch 9, wobei die Elektronikeinheit (110) des Weiteren eine Zeiteinheit (117) umfasst, welche die aktuelle Zeit bereitstellt,
wobei die Elektronikeinheit (110) einen Zeitpunkt des Empfangs des Messwerts (M) und die vom Benutzer durch die erste Eingabeeinheit (115) vorgenommene Zuweisung der Messwertbezeichnung (MB) zum Messwert (M) als Auswahlhistorie im ersten Datenspeicher (112) speichert,
wobei die Elektronikeinheit (110) beim Empfangen eines weiteren Messwerts (M) eine Messwertbezeichnung (MB) basierend auf der aktuellen Zeit und der Auswahlhistorie vorschlägt oder automatisch dem weiteren Messwert (M) zuweist.

11. Messwertverarbeitungsverfahren gemäß Anspruch 9 oder 10, wobei die Elektronikeinheit (110) des Weiteren eine Ortungseinheit (116) umfasst, welche messwertspezifische Ortungsdaten (D) generiert oder empfängt,
wobei die Elektronikeinheit (110) die mindestens eine Messwertbezeichnung (MB) dem mindestens einen Messwert (M) abhängig von den messwertspezifischen Ortungsdaten (D) vorschlägt oder automatisch zuweist.

12. Messwertverarbeitungsverfahren gemäß einem der Ansprüche 9 bis 11, wobei die Elektronikeinheit (110) abhängig von einem Messwertbereich, welchem der empfangene Messwert (M) zuordenbar ist, mithilfe einer Messwertbereichsdatei eine Messwertbezeichnung (MB) vorschlägt oder automatisch dem Messwert (M) zuweist.

13. Messwertverarbeitungsverfahren umfassend die folgenden Schritte:
- Bereitstellen einer Elektronikeinheit (110) gemäß Anspruch 5,
- Verbinden des Sensoranschlusses (111) der Elektronikeinheit (110) mit einem Sensor (120),
- Empfangen von mindestens einem Messwert (M) von dem Sensor (120) an der Elektronikeinheit (110),
- Speichern des Messwerts (M) in dem ersten Datenspeicher (112),
- Generieren oder Empfangen von messwertspezifischen Ortungsdaten (D) durch die Ortungseinheit (116),
- Laden der Datei mit mindestens einer Messwertbezeichnung (MB) aus dem ersten Datenspeicher (112),
- Automatisches Zuweisen der Messwertbezeichnung (MB) zum Messwert (M) abhängig von den messwertspezifischen Ortungsdaten (D).

14. Messwertverarbeitungsverfahren umfassend die folgenden Schritte:
- Bereitstellen eines Messwertverarbeitungssystems (100) gemäß einem der Ansprüche 6 bis 8,
- Verbinden des Sensoranschlusses (111) der Elektronikeinheit (110) mit einem Sensor (120),
- Empfangen von mindestens einem Messwert (M) von dem Sensor (120) an der Elektronikeinheit (110),
- Speichern des Messwerts (M) in dem ersten Datenspeicher (112),
- Eingabe mindestens einer Messwertbezeichnung (MB) an der zweiten Eingabeeinheit (134) der Recheneinheit (130),
- Senden der Messwertbezeichnung (MB) durch das zweite Kommunikationsmodul (131) der Recheneinheit (130) an die Elektronikeinheit (110),
- Anzeigen des Messwerts (M) und der mindestens einen Messwertbezeichnung (MB),
- Zuweisen der Messwertbezeichnung (MB) zum Messwert (M) mittels der ersten Eingabeeinheit (115).
